**Europäisches Patentamt**

**European Patent Office**

**Office européen des brevets**

(19)

(11) Veröffentlichungsnummer: **0 246 519**

**A2**

(12) # EUROPÄISCHE PATENTANMELDUNG

(21) Anmeldenummer: **87106731.0**

(22) Anmeldetag: **08.05.87**

(51) Int. Cl.³: **A 01 D 34/82**
**A 01 D 34/64**

(30) Priorität: **13.05.86 US 862860**

(43) Veröffentlichungstag der Anmeldung:
**25.11.87 Patentblatt 87/48**

(84) Benannte Vertragsstaaten:
**DE FR GB SE**

(71) Anmelder: **DEERE & COMPANY**
**1 John Deere Road**
**Moline Illinois 61265(US)**

(72) Erfinder: **Hutchison, Wayne Robert**
**Route 2 Box 369C**
**Mayville Wisconsin 53050(US)**

(74) Vertreter: **Feldmann, Bernhard et al,**
**DEERE & COMPANY European Office, Patent Department**
**Steubenstrasse 36-42 Postfach 503**
**D-6800 Mannheim 1(DE)**

(54) Vorrichtung zur Übertragung des Gewichtes.

(57) Eine Gewichtsverteilungsvorrichtung (40) für ein an der Frontseite eines Gartenschleppers (10) angeordnetes Mähwerk (28) ist mit einem Pedal (42) ausgerüstet, das bei Betätigung über eine Gestängeanordnung auf die Gewichtsverteilungsvorrichtung einwirkt und wahlweise einen Teil des Gewichtes des Mähwerkes (28) auf den Gartenschlepper (10) überträgt. Das Pedal (42) weist eine Torsionsfeder (70) auf, die einenends einen Teil des Gewichtes des Mähwerkes (28) auffängt, anderenends gegen eine federbeaufschlagte Tragplatte anliegt und sich damit am Gartenschlepper abstützt.

./...

Fig. 2

**DEERE & COMPANY**

EUROPEAN OFFICE

## Vorrichtung zur Übertragung des Gewichtes

Die Erfindung bezieht sich auf eine Vorrichtung zur Übertragung des Gewichtes eines am Kraftfahrzeug, insbesondere Gartenschlepper, frontseitig angebrachten Arbeitsgerätes, insbesondere Mähwerkes, mit einer manuell betätigbaren Stellvorrichtung zur Verstellung einer Gestängeanordnung für das Arbeitsgerät bzw. Mähwerk zwischen einer unwirksamen und einer wirksamen Arbeitsstellung.

Es ist bereits allgemein ein Gartenschlepper mit einem an der Frontseite angebrachten Mähwerk bekannt, das über eine Gestängeanordnung an die Unterseite des Gartenschleppers angeschlossen ist und über einen handbetätigbaren Hebel zwischen einer abgesenkten und einer angehobenen Stellung verstellbar ist. Arbeiten derartige Gartenschlepper mit frontseitig montiertem Mähwerk an einem Hang, so verschiebt sich der Schwerpunkt des Fahrzeuges entweder nach vorne oder nach hinten. Dadurch wird auch eine Gewichtsverlagerung des Schleppers auf den Rädern herbeigeführt, so daß ein Durchrutschen der angetriebenen Räder auftreten kann, wenn diese nicht mehr ausreichend belastet werden.

Demgegenüber liegt der Erfindung die Aufgabe zugrunde, das Arbeitsgerät, insbesondere das Mähwerk, an dem Kraftfahrzeug bzw. dem Gartenschlepper derart anzuordnen, daß mit relativ einfachem baulichen Aufwand das Gewicht des Arbeitsgerätes derart gelagert werden kann, daß stets eine ausreichende Bodenhaftung des Fahrzeuges gewährleistet ist. Diese Aufgabe ist durch die im kennzeichnenden Teil des Anspruches 1 aufgeführten Merkmale gelöst. Durch die vorteilhafte Verwendung der Gewichtsverteilungsvorrichtung wird in relativ kurzer Zeit eine Verlagerung des Arbeitsgerätes bzw. des Mähwerkes am Fahrzeug herbeigeführt, indem hierzu das Pedal betätigt wird, das dann eine entsprechende Verstellung des Arbeitsgerätes herbeiführt. Durch diese Anordnung besteht für die Bedienungsperson die Möglichkeit, auch bei Arbeiten am Hang eine relativ schnelle Gewichtsverlagerung des Arbeitsgerätes herbeizuführen, so daß eine ausreichende Belastung des zuvor weniger belasteten Laufrades herbeigeführt wird. Das Pedal ist hierzu in vorteilhafter Weise über einen Hebelarm und eine Gestängeanordnung mit einer Feder verbunden, die einenends am Kraftfahrzeug angeschlossen ist. Ferner ist der Gestängeanordnung eine Spielverbindung bzw. eine Schlitzführung zugeordnet, die eine vertikale Verstellung des Arbeitsgerätes bzw. des Mähwerkes gestattet, ohne dabei einen Einfluß auf die Bewegung des Pedales zu nehmen. Der Gestängeanordnung ist auch ferner eine vorspannbare Feder zugeordnet, die ca. 20 % des Gewichtes des Mähwerkes auf das Fahrzeug überträgt, wenn die Feder hierzu gespannt wird. Beispielsweise ist es im Arbeitseinsatz erforderlich, daß ein Teil des Gewichtes des Mähwerkes zusätzlich auf das Fahrzeug übertragen wird, dann braucht die Bedienungsperson lediglich das Pedal zu betätigen, um somit eine Torsionsfeder zu verdrehen, die dann 80 % des Gewichtes des Arbeitsgeräts bzw. des Mähwerkes aufnimmt. Soll beispielsweise das Arbeitsgerät bzw. das Mähwerk und somit die zugehörige Gewichtsverteilungsvorrichtung von ihrer aktiven Stellung in ihre inaktive Stellung verstellt werden, so braucht die Bedienungsperson lediglich das Pedal weniger zu belasten, da dieses dann aufgrund der Torsionsfeder und der Feder bzw. der Totpunkt-Federanordnung in seine inaktive, d. h. unbelastete Stellung verstellt wird. Die Spielverbindung bzw. die Schlitzführung gestattet in dieser Stellung eine Verstellung des Arbeitsgerätes ohne Beeinflussung des Pedales. Durch die vorteilhafte Anordnung der einzelnen Gestänge sowie der Gewichtsverteilungsvorrichtung läßt sich somit in kürzester Zeit bis zu 80 % des Gewichtes des Mähwerkes auf das Fahrzeug übertragen, ohne daß die Bedienungsperson große Umrüstarbeiten an dem Arbeitsgerät bzw. an dem Mähwerk vorzunehmen braucht.

Im folgenden wird die Erfindung anhand von lediglich einen Ausführungsweg darstellenden Zeichnungen erläutert. Es zeigen:

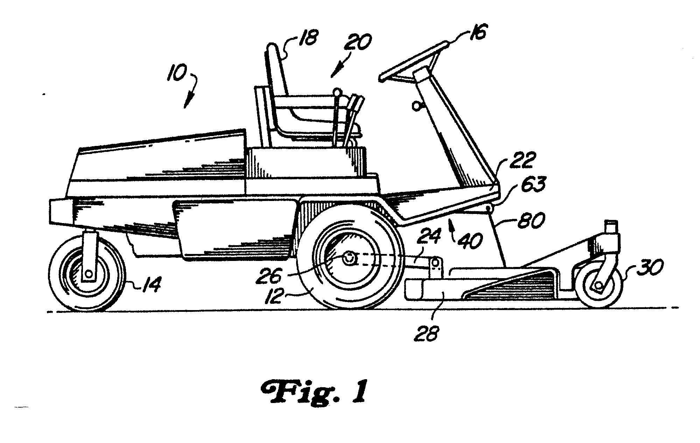

Fig. 1     eine Seitenansicht eines Gartenschleppers mit einem an der Stirnseite angeschlossenen Mähwerk,

Fig. 2     eine Seitenansicht der Gestängeanordnung für das Mähwerk in der angehobenen Stellung,

Fig. 3     eine ähnliche Ansicht wie in Fig. 2, jedoch mit abgesenktem Mähwerk,

Fig. 4     eine Draufsicht der Gestängeanordnung zur Aufnahme des Mähwerkes.

In der Zeichnung ist mit 10 ein Kraftfahrzeug bzw. ein Gartenschlepper bezeichnet, der sich auf zwei vorderen, antreibbaren Laufrädern 12 und einem hinteren steuerbaren Laufrad 14 abstützt. Der Gartenschlepper 10 ist ferner mit einem Lenkrad 16 und dahinter mit einem Fahrersitz 18 ausgerüstet, neben dem die einzelnen Bedienungselemente 20 angeordnet sind. Weitere Bedienungselemente, beispielsweise Pedale zur Betätigung des Gartenschleppers, sind in der Zeichnung der Einfachheit halber nicht dargestellt. An die vordere Antriebsachse 26 sind Tragarme 24 angeschlossen, die zur Aufnahme eines Mähwerkes 28 dienen. An der Stirnseite des Mähwerkes 28 ist ein Stützrad 30 angeordnet, das in seiner Höhe einstellbar ist, um somit die Schnitthöhe des Mähwerkes 28 verändern zu können.

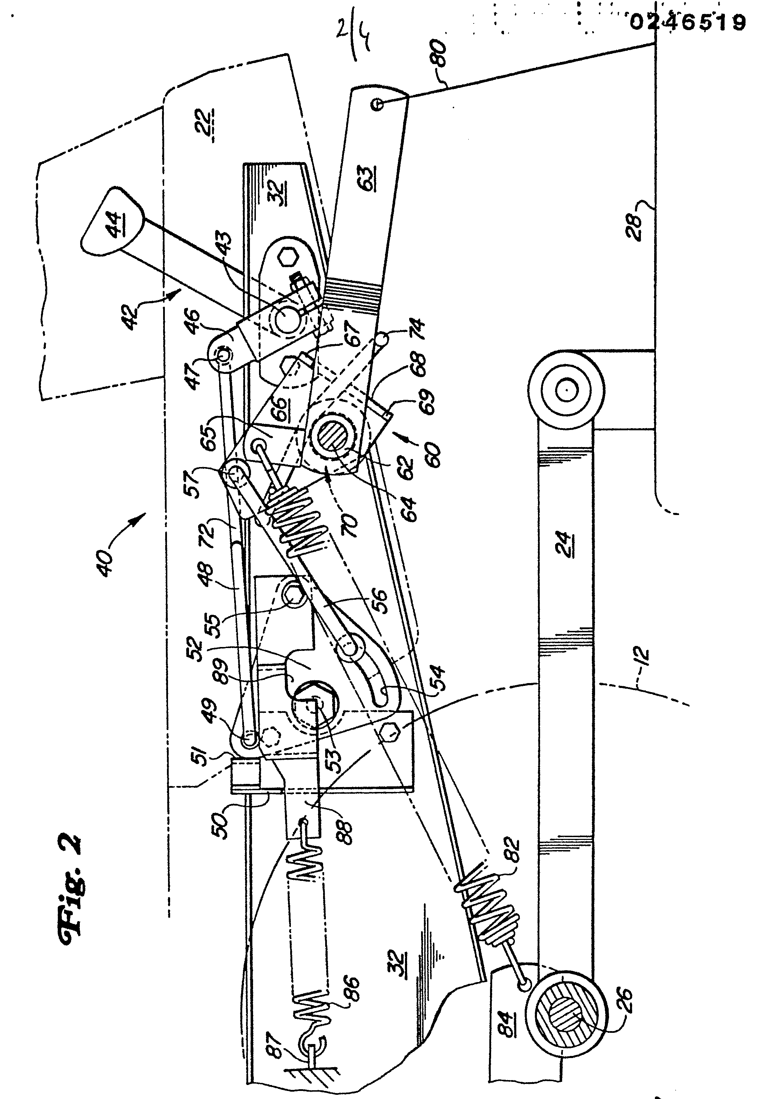

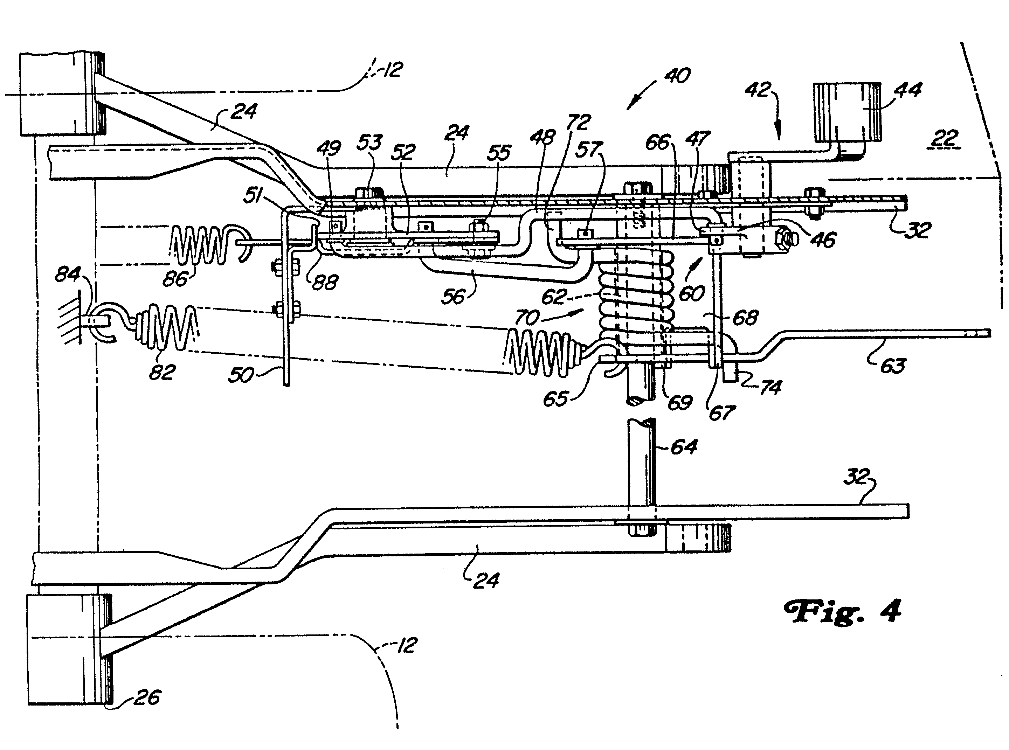

Eine Gewichtsübertragungs- bzw. Gewichtsverteilungsvorrichtung 40 der vorliegenden Erfindung besteht aus einer an der Unterseite der Plattform 22 des Gartenschleppers 10 vorgesehenen Gestängeanordnung. Wie aus den Figuren 2 und 4 hervorgeht, ist die Gewichtsübertragungsvorrichtung 40 im wesentlichen vor der Antriebsachse 26 und insbesondere zwischen Rahmenträgern 32 zur Aufnahme der Plattform 22 angeordnet. Ein Pedal 42 ist links vom Rahmenträger 32 angeordnet und schwenkt um eine im Rahmenträger 32 vorgesehene Achse 43. Das Pedal 42 besteht aus einer Pedalplatte 44, die sich oberhalb der Plattform 22 erstreckt. Die Pedalplatte 44 kann mit einer nicht rutschenden Auflage versehen sein. Das Pedal 42 ist über die Achse 43 mit einem Hebel 46 verbunden, der sich an der Innenseite des linken Rahmenträgers 32 erstreckt. Das obere Ende des Hebels weist eine Bohrung 47 zum Anschluß eines Gestänges 67 auf. Das Gestänge 67 ist S-förmig ausgebildet und besteht aus einem quer zur Bewegungsrichtung des Gartenschleppers verlaufenden Gestängeteil sowie einem sich in Fahrtrichtung erstreckenden Gestängeteil 48. Das hinten liegende Ende des Gestängeteils 48 weist einen abgewinkelten Gestängeteil 49 auf, der in einer Bohrung einer dreieckförmigen Stellplatte aufgenommen ist.

Die dreieckförmig ausgebildete Stellplatte 52 ist an eine am Rahmenträger 32 angeordnete Achse 53 schwenkbar angeschlossen. Die Stellplatte 52 kann in einem bestimmten Bereich gedreht bzw. geschwenkt werden, der durch eine Anschlagplatte 51 begrenzt wird, die an einem Querträger 50 angeordnet ist. Das eine Ende eines C-förmigen Lenkers 56 ist in einem kreisförmigen Schlitz 54 aufgenommen, der in dem unteren Teil der Stellplatte 52 vorgesehen ist. Das andere Ende des C-förmig ausgebildeten Lenkers 56 ist über einen abgewinkelten Gestängeteil 57 an einer L-förmig ausgebildeten Tragplatte 60 angeschlossen, die Teil der Gewichtsverteilungsvorrichtung 40 ist.

Die L-förmige Tragplatte 60 ist auf einer länglichen, quer verlaufenden Buchse angeordnet, die auf einer zwischen den Rahmenträgern 32 befestigten Achse 64 drehbar gelagert ist. Die Tragplatte 60 weist eine sich in Längsrichtung des Gartenschleppers 10 erstreckende Platte 66 mit einer quer
verlaufenden Platte 68 auf, die mit oberen und unteren
Anschlußösen 67 und 69 ausgestattet ist.

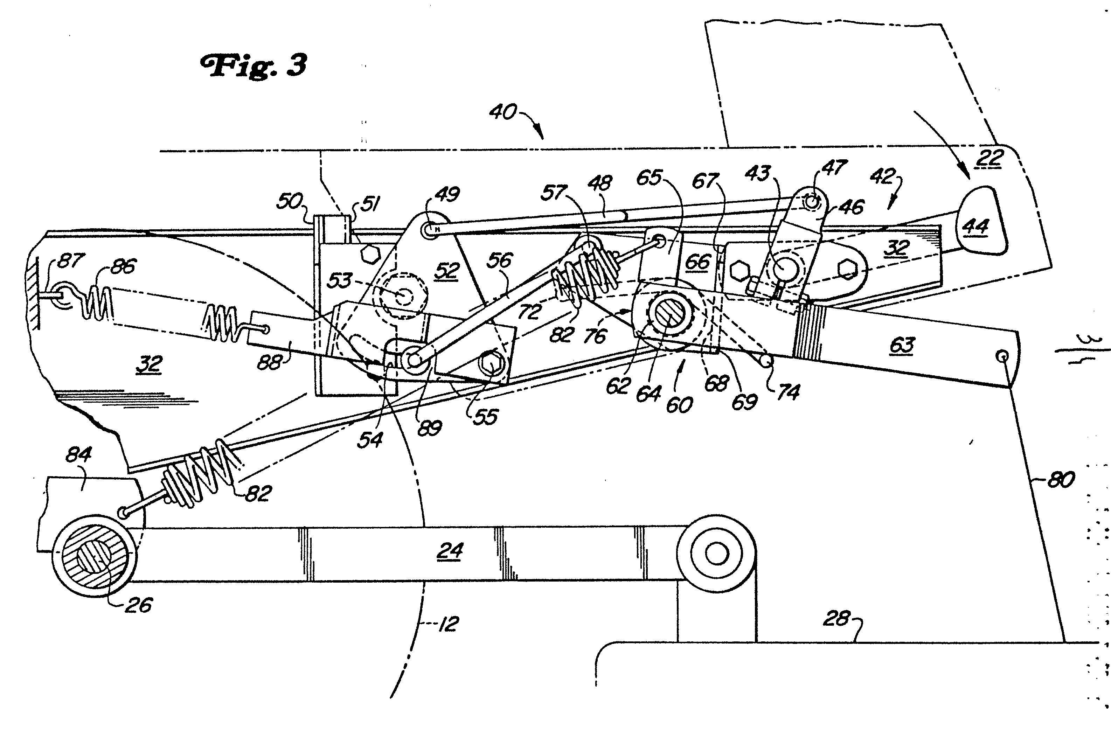

Die Achse 64 ist in den Rahmenträgern 32 drehbar aufgenommen und mit einem sich nach vorne erstreckenden Hubarm 63
und einem sich nach oben erstreckenden Hebelarm 65 fest
verbunden. Der Hubarm 63 ist zwischen den seitlich herausstehenden Ösen 67 und 69, die eine U-förmige Aussparung
bilden, aufgenommen, wobei die Unterseite des Hubarmes 63
gegen eine sich nach vorne erstreckende Torsionsfeder 74
abstützt, deren Stellkraft mit Bezug auf Fig. 2 und 3 nach
oben gerichtet ist. Der Hubarm 63 ist ferner über ein flexibles Kabel 80 an das Gehäuse des Mähwerkes 28 angeschlossen. Eine vorgespannte Feder 82 ist einenends an den Hebelarm 65 und anderenends an eine Öse einer Halterung 84 angeschlossen und nimmt somit 20 % des Gewichtes des Mähwerkes
28 auf und überträgt dieses auf das Fahrzeug.

Eine Pedalfeder 86 ist einenends an eine Öse 87 und anderenends an eine Lasche 88 angeschlossen. Die Lasche 88 ist
wiederum an der Stellplatte 52 mittels eines Schraubenbolzens 55 befestigt. Die Lasche 88 weist eine Aussparung 89
auf, die zur Aufnahme des C-förmig ausgebildeten Lenkers
56 dient, wenn die Gewichtsverteilungsvorrichtung 40 gemäß
Fig. 3 voll zur Wirkung kommt. Die Pedalfeder 86 dient zur
Spannung bzw. Druckbeaufschlagung des Pedales 42, um es
anzuheben, wenn die Wirkungslinie oberhalb der Achse 53
verläuft. Die Feder reduziert den Druck auf das Pedal 42,
wenn die Linie unterhalb der Achse 53 verläuft (siehe Fig.
3).

In der nicht belasteten Stellung gemäß Fig. 2 überträgt
die Gewichtsverteilungsvorrichtung 40 20 % des Gewichtes
des Mähwerkes 28 auf den Gartenschlepper 10 durch Zuhilfenahme der Feder 82. Beim Mäheinsatz des Gartenschleppers
10 ist es wünschenswert, ein zusätzliches Gewicht auf den

Gartenschlepper 10 zu übertragen. Hierzu drückt die Bedienungsperson lediglich das Pedal 42, um somit die Torsionsfeder 70 zu drehen, so daß anstelle von 20 % ca. 80 % des Mähwerkgewichtes von der Torsionsfeder 70 aufgefangen wird. In der vollwirksamen Stellung gemäß Fig. 3 überträgt die Gewichtsverteilungsvorrichtung 40 in etwa 80 % des Mähwerkgewichtes über die Torsionsfeder 70 auf den Gartenschlepper 10. Ein Teil des Gewichtes wird über das Stützrad 30 abgefangen, so daß bei allen Arbeitsbedingungen ein ausreichender Bodenkontakt aufrechterhalten wird und somit eine gute Schnittwirkung.

Um die Gewichtsverteilungsvorrichtung aus der vollwirksamen Stellung gemäß Fig. 3 in die teilwirksame Stellung zu verstellen, belastet die Bedienungsperson das Pedal 42 weniger, so daß es in seine Stellung gemäß Fig. 2 zurückschwenkt, wobei die Pedalfeder 86 die Zurückschwenkung des Pedals 42 unterstützt. Der bogenförmige Schlitz 54 in der Stellplatte 52 gestattet eine schwimmende Bewegung der Plattform 22, ohne daß hierzu das Pedal 42 betätigt zu werden braucht. Die Benutzung bzw. der Einsatz der Gewichtsverteilungsvorrichtung 40 gestattet der Bedienungsperson, zusätzliches Gewicht des Mähwerkes auf den Gartenschlepper zu übertragen, wenn dies aufgrund des Arbeitseinsatzes notwendig sein sollte.

## Patentansprüche

1.  Vorrichtung zur Übertragung des Gewichtes eines am Kraftfahrzeug, insbesondere Gartenschlepper (10), frontseitig angebrachten Arbeitsgerätes, insbesondere Mähwerkes (28), mit einer manuell betätigbaren Stellvorrichtung zur Verstellung einer Gestängeanordnung für das Arbeitsgerät bzw. Mähwerk zwischen einer unwirksamen und einer wirksamen Arbeitsstellung, dadurch gekennzeichnet, daß die die Stellvorrichtung mit dem Mähwerk (28) verbindende Gestängeanordnung eine Feder (70) aufweist, die die auf die Stellvorrichtung einwirkende Stellkraft und somit einen Teil des Gewichtes des Mähwerkes (28) auf den Gartenschlepper (10) überträgt, ohne daß dabei das Mähwerk Bodenkontakt verliert.

2.  Vorrichtung nach Anspruch 1, dadurch gekennzeichnet, daß die Stellvorrichtung ein Pedal (42) ist.

3.  Vorrichtung nach Anspruch 1, dadurch gekennzeichnet, daß die Feder zur Anhebung des Gestänges bzw. des Mähwerkes (28) eine Torsionsfeder (70, 74) ist.

4.  Vorrichtung nach Anspruch 1, dadurch gekennzeichnet, daß die Feder (70, 74) zur Anhebung des Gestänges in etwa 80 % des Gewichtes des Mähwerkes (28) abstützt, wenn die Stellvorrichtung (42) sich in ihrer vollwirksamen Stellung befindet, wobei das Mähwerk einen Bodenkontakt beibehält.

5.  Vorrichtung nach Anspruch 1, dadurch gekennzeichnet, daß der Gestängeanordnung eine Schlitzführung (54) derart zugeordnet ist, daß eine vertikale Schwimmbewegung des Mähwerkes (28) ausgeführt werden kann, ohne daß das Pedal (42) mit verstellt wird.

6.  Vorrichtung nach Anspruch 1, dadurch gekennzeichnet, daß zwischen der Gestängeanordnung und dem Gartenschlepper (10) eine vorgespannte Feder (82)
angeordnet ist, die 20 % des Gewichtes des Mähwerkes
(28) aufnimmt und dieses auf den Gartenschlepper (10)
überträgt, wenn sich das Pedal (42) in einer nicht
wirksamen Stellung befindet.

7. Vorrichtung nach Anspruch 1, dadurch gekennzeichnet,
daß eine Totpunkt-Federanordnung (86) zwischen der
Gestängeanordnung und dem Gartenschlepper (10) vorgesehen ist, die die Verstellung des Pedals (42) in
eine unwirksame Stellung bewirkt und die Stellkraft
zur Verstellung des Pedals (42) in eine wirksame Stellung reduziert, wenn die Federanordnung über den Totpunkt hinaus verstellt wird.

8. Vorrichtung nach einem oder mehreren der vorhergehenden Ansprüche, dadurch gekennzeichnet, daß die
Gestängeanordnung aus einem doppelarmigen Hebelarm
(63, 65) besteht, der einenends an dem Mähwerk (28),
anderenends über die vorspannbare Feder (82) an dem
Gartenschlepper (10) angeordnet ist, wobei das Pedal
(42) über einen Hebel (46), ein Gestängeteil (48),
die die Schlitzführung (54) aufweisende Stellplatte
(52) und die Totpunkt-Federanordnung (86) ebenfalls
an den Gartenschlepper angeschlosssen ist, wobei die
Kraftlinie der Totpunkt-Federanordnung (86) je nach
Stellung des Pedals (42) einmal oberhalb und einmal
unterhalb der Achse (53) der Stellplatte (52) verläuft
und die Anlenkstelle der Federanordnung (86) zwischen
der Achse (53) der Stellplatte (52) und der Achse (64)
des doppelarmigen Hebelarmes (63, 65) liegt, wobei die
Torsionsfeder (70, 74) einenends gegen den doppelarmigen Hebelarm (63), anderenends gegen eine verschwenkbare Platte (66) anliegt, die über einen Lenker (56)
an die Schlitzführung (54) der Stellplatte (52) angeschlossen ist und das Pedal (42) in seine unwirksame
Stellung schwenkt.

Fig. 1

Fig. 2

**Fig. 3**

**Fig. 4**